# EUROPEAN PATENT APPLICATION

(11) **EP 0 661 632 A1**
(43) Date of publication of application: **05.07.1995**
(21) Application number: 94308664.5
(22) Date of filing: 23.11.1994
(51) Int. Cl.: G06F 9/445

(54) **Booting of operating systems in computers**

(30) Priority: 30.12.1993 US 176164
(71) Applicant: International Business Machines Corporation, Armonk, N.Y. 10504 (US)
(72) Inventor: Bealkowski, Richard, Austin, Texas 78759 (US); Grimes, Benjamin Russell, Austin, Texas 78759 (US); Ruotolo, Lisa Anne, Richmond, Virginia 23233 (US)
(74) Representative: Lloyd, Richard Graham

(57) **Abstract**

An operating system can be booted into a computer memory from one of a plural number of boot sources. A list of boot sources and a boot source indicator are provided in non-volatile memory. The computer undergoes a preliminary initialization and testing and a secondary initialization and testing. Before the secondary initialization and testing occurs, the boot source indicator is cleared. After the second initialization and testing has occurred, the boot source indicator is moved to a next boot source in the list, wherein an attempted boot is made from the next boot source. If the boot source is a one-way boot source and the attempted boot fails, control is not returned to the central processing unit. The user can initiate a warm start, wherein the secondary initialization and testing step reoccurs without affecting the boot source indicator. The boot source indicator is moved to the next boot source in the list and an attempted boot is made. This allows a user to "ratchet" past a one-way boot source so that another boot source can be utilized.

## Description

The present invention relates to the booting or loading of an operating system into a computer.

Personal computers utilize volatile memory in the form of Random Access Memory (RAM) as a relatively inexpensive and fast memory device for use in conjunction with central processing unit operations. During the operation of a computer, an operating system program is loaded into the RAM. The operating system manages the components or subsystems of the computer, processes commands and controls programs. In addition to the operating system, the RAM contains data and application programs that have been loaded during the operation of the computer. When electrical power to the computer is switched off, the contents of the RAM vanishes.

Some essential programs are contained in non-volatile memory, such as Read Only Memory (ROM) and Non-Volatile RAM (NVRAM). These essential programs include Basic Input/Output System (BIOS) and Power-On Self-Test (POST) programs, which programs initialize and test the components of the computer.

When electrical power is applied to the computer, the operating system is loaded into RAM. This process is referred to as booting or bootstrapping the computer (because the computer pulls itself up by its own bootstraps to start up, without outside assistance).

The source of the operating system can vary. In the early days of IBM personal computers, the operating system was typically provided on a floppy (or removable) diskette. Thus, the boot procedure checked the floppy diskette drive (typically referred to as the A: drive) for the operating system, using the interrupt call INT 19H. If the boot procedure failed to load the operating system from a diskette in the drive, then another software interrupt call, INT 18H, was made. This passed control to a resident BASIC interpreter program located in ROM.

With the introduction of a fixed disk adapter (or hard disk drive) in the IBM PC/XT, the boot procedure has been extended. The fixed disk adapter has a ROM that intercepts and replaced the INT 19H call or vector with an INT 19H routine. The INT 19H routine first attempts to boot from the floppy disk drive. If that boot operation fails, then the routine checks the hard disk. If the boot operation from the hard disk fails, then the boot control passes to the resident BASIC interpreter program by the use of the INT 18H call.

Still another extension has been devised which allows the computer to boot from a network. The boot procedure first attempts to boot off of the floppy disk drive, and if unsuccessful, then attempts to boot off of the hard disk. If the boot from the hard disk fails, then the INT 18H call is made. Now however, the INT 18H call is intercepted by a network boot procedure, which is referred to as a Remote Program Load (RPL) procedure. No resident BASIC interpreter is used. Instead, if the network boot fails, then the RPL procedure continually retries until a successful boot is obtained.

In newer computer systems, such as the IBM PS/2 Models 90, 95, the boot procedure has again been enhanced to provide for selectable boot. Selectable boot allows the user to tailor the order of the devices.

A problem arises in selectable boot when the user prefers to boot from a network as the principle boot source, with a local fixed or floppy disk as the secondary source. If the network or the network server are not operational, the RPL procedure continually retries until the network services are restored. The user is thus prevented from booting off of another boot source because the RPL procedure is "one-way". A one way boot source does not return control of the boot process to the main boot procedure if the attempted boot operation is unsuccessful. Often times, however, the user would prefer to boot from a local disk (such as a fixed disk or a floppy diskette) in order to get some work done while awaiting the restoration of network services.

One method to allow the boot procedure to continue after a failed network boot attempt would be to require that all subsystems (floppy disk adapter, fixed disk adapter and network adapter) return control to the main boot procedure within a predetermined amount of time. However, this method may be impractical because existing subsystems may not be able to be retrofitted. In addition, the subsystems (for example, input/output adapters for the keyboard, display, etc.) may alter the computer system so drastically that a clean return may not be possible. Such alterations may take the form of alterations of low memory locations, interception of interrupt vectors and alterations of hardware states. Restoration of the computer by the subsystem may not be possible.

This invention provides a method for booting an operating system into memory of a computer, said computer comprising subsystems, comprising the steps of: a) initializing and testing said subsystems; b) setting a boot source indicator to a first boot source; c) attempting to boot said computer from said first boot source; c) reinitializing and testing said subsystems while maintaining said boot source indicator on said first boot source; e) setting said boot source indicator to a second boot source; and f) attempting to boot said computer from said second boot source.

This enables recovery from an unsuccessful boot attempt from a one-way boot source in a manner that can be retrofitted into existing computer systems.

In a particular embodiment an operating system is booted into the memory of a computer, which computer includes subsystems. The subsystems are initialized and tested. A boot source indicator is set to a first boot source. An attempt to boot the computer from the first boot source is made. The subsystems of the computer are reinitialized and tested while maintaining the boot source indicator on the first boot source. The boot source indicator is then set to a second boot source. An attempt to boot the computer from the second boot source is made.

In accordance with one embodiment of the present invention, the first boot source is a one-way boot source, wherein the attempt to boot the computer from the first boot source further includes passing control of the booting method to a subsystem accessing the first boot source and maintaining control of the booting method at the subsystem accessing the first boot source if the attempted boot was unsuccessful.

Preferably, a user input can initiate the reinitializing and testing of the subsystems while maintaining the boot source indicator on the first boot source.

The initializing and testing of the subsystems can include a preliminary initializing and testing and a secondary initializing and testing. The boot source indicator can be cleared before the secondary initializing and testing occurs.

The present invention enables all of the available boot sources in a selectable boot sequence to be accessed for booting, regardless of the success of any one boot attempt or the type of boot source.

In an embodiment the possible boot sources are contained in a Boot Source Table. A pointer, in the form of a Boot Source State Index, points to an entry in the Boot Source Table. The Boot Source Table and the Boot Source State Index are stored in non-volatile memory and are unaffected by the initializing and testing of the computer.

If an attempted boot from a boot source is successful, the control can be passed from the boot method to the hoot record of tie operating system.

If an attempted boot is unsuccessful, then control of the boot process may or may not be returned to the central processing unit. If control is returned (a two-way boot source), then the Boot Source State Index is moved to the next boot source in the Boot Source Table and an attempted boot is made off of the next boot source.

If control is not returned to the central processing unit (a one-way boot source), then a user may return to a portion of the initialization and testing stage of the computer and reinitialize and retest the computer subsystems. The Boot Source State Index and Boot Source Table are unaffected by the reinitialization and retest. After the reinitialization and retest, the Boot Source State Index is moved to the next boot source and a boot is attempted from that next boot source. In this manner, a user can "ratchet" through the list of boot sources, regardless of the success of or the return status of a boot attempt.

An embodiment of the invention will now be described, by way of example only, with reference to the accompanying drawings, wherein:
Fig. 1 is a perspective view of a personal computer;
Fig. 2 is a block diagram of certain subsystems of the personal computer;
Fig. 3 is a schematic view of a Boot Source Table;
Fig. 4 is flow chart of the method of the present invention, in accordance with a preferred embodiment.

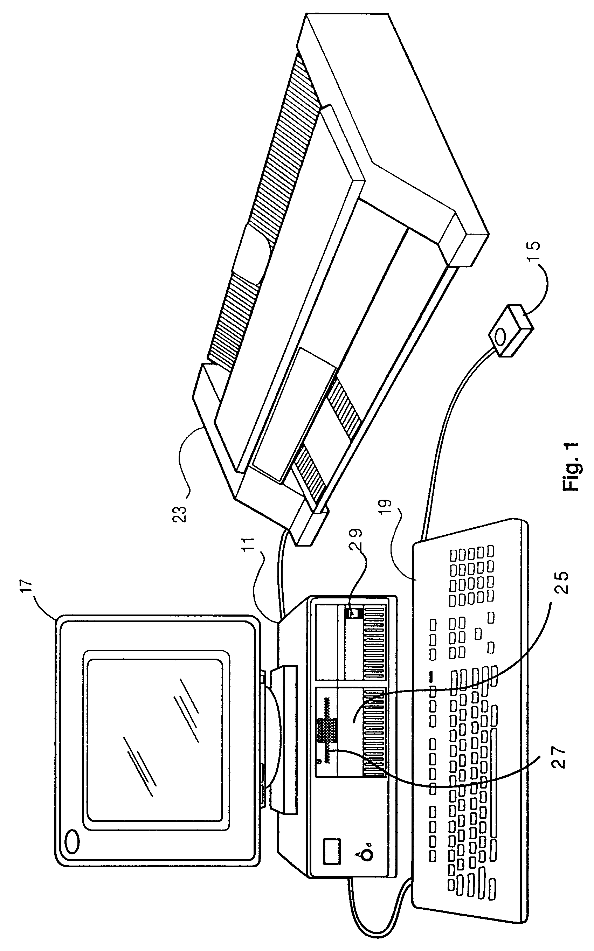

In Fig. 1, there is shown a schematic view of a personal computer 11 or data processing system. The computer 11 includes a user interface, which has a mouse 15, a display screen 17 and a keyboard 19. The computer 11 is connected to an output device such as a printer 23. The computer 11 also has storage devices in the form of a hard disk drive 25 and a floppy disk drive 27. An on-off button or switch 29 is provided on the computer 11 to control the application of electrical power to the internal subsystems or components of the computer.

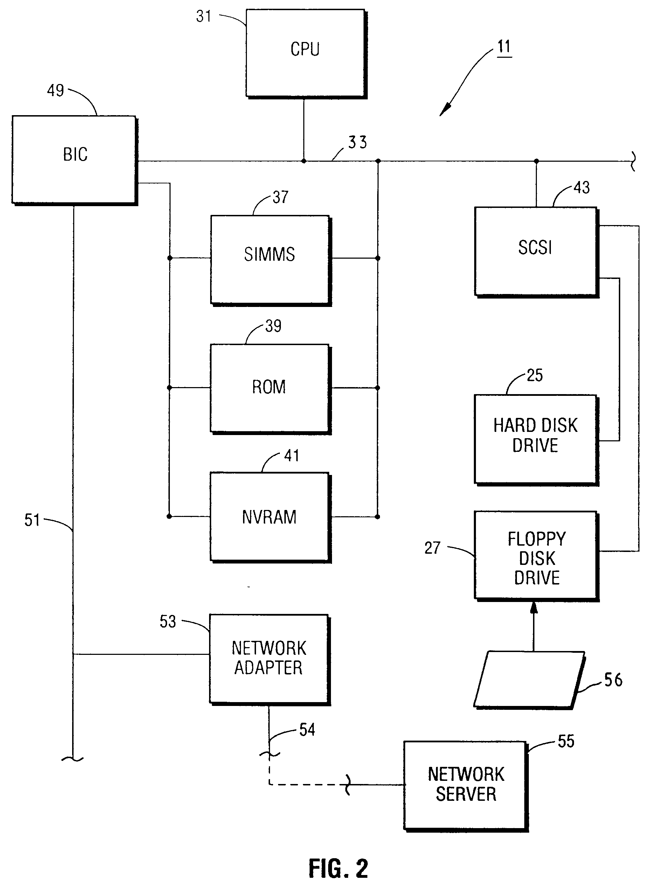

Referring now to Fig. 2, some of the internal subsystems of the computer 11 will be described. There is a central processing unit (CPU) 31. While any appropriate CPU can be used, suitable CPU's are the 80386 and the 80486, which are sold by INTEL Corporation. The CPU 31 is connected to the other subsystems by a high speed CPU local bus 33. The local bus 33 contains data, address and control lines. Memory devices are connected to the local bus. Such memory devices include volatile Dynamic Random Access Memory (DRAM) configured in Single Inline Memory Modules (SIMMs) 37 and non-volatile Read Only Memory (ROM) 39. The ROM 39 contains a program known as Basic Input/Output System (BIOS), which is used for booting the computer among other things. The booting procedure will be described in more detail hereinafter. In addition, some Non-Volatile Random Access Memory (NVRAM) 41 is also provided and is connected to the local bus 33. A battery (not shown) provides the necessary electrical power to operate the NVRAM 41 when external electrical power is not provided to the computer 11.

The local bus 33 is also connected to a Small Computer Systems Interface (SCSI) controller 43. The SCSI controller 43 is connected to the hard or fixed disk drive 25 and to the floppy disk drive 27. The disk drives 25, 27 are memory storage devices. In addition, the SCSI controller 43 can be connected to additional ROM and RAM.

The local bus 33 is also connected to a Bus Interface Controller (BIC) 49. The BIC 49 couples the local bus with an Input/Output (I/O) bus 51, and functions as a protocol translator, memory controller and direct memory access (DMA) controller, among other functions. By means of the I/O bus 51, the BIC 49 is connected with an optional feature bus such as a MICRO CHANNEL bus having a plurality of I/O slots for receiving MICRO CHANNEL adapter cards. The I/O bus 51 includes data, address and control lines. The I/O bus 51 may be configured to bus specifications other than the MICRO CHANNEL specification. The I/O bus 51 can be connected to I/O devices and memory devices. In Fig. 2, the I/O bus 51 is shown as being connected to a network adapter card 53. The network adapter card 53 is in turn connected to a network 54 (such as a local area network) and to a network server 55.

The computer 11 can boot (or load) an operating system into RAM 37 from a variety of sources. One such source is the hard disk drive 25. The operating system, which is software, is stored on the hard disk for retrieval. Another source of an operating system is a floppy disk 56 inserted into the floppy disk drive 27. Floppy disks 56 containing the operating system software can be loaded and unloaded (one at a time) into the floppy disk drive 27. Still another source of an operating system is the network server 55. The network server itself stores the operating system software on a network storage device, such as a hard disk drive. The network server accesses the network storage device to retrieve the operating system. The network server then makes the operating system available to the booting computer 11 over the network 54.

The user can determine the order of boot sources. Ideally, if one of the boot sources fails to provide a successful boot, then the computer should attempt to boot from the next boot source in the user-provided order until a successful boot is accomplished.

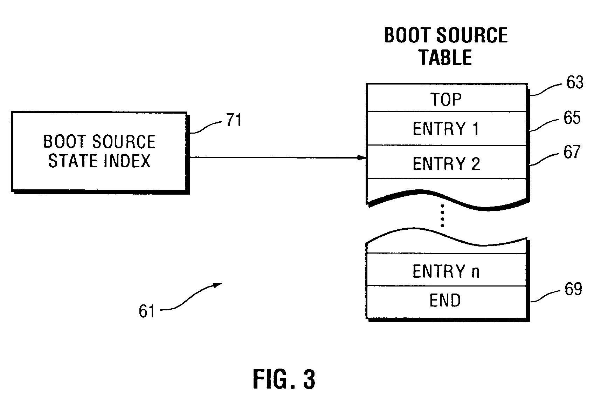

The apparatus provides for successive attempts at booting from the boot sources. If booting from one boot source is unsuccessful, then the next boot source from the order of boot sources is utilized regardless of the type of boot source used. The boot sources are provided in a Boot Source Table 61, shown in Fig. 3. The Boot Source Table 61 has a top 63, a list of plural entries 65, 67, etc., and an end 69. Each entry contains information on a particular boot source. For example, the first entry 65 contains information on the network server as a boot source, the second entry 67 contains information on the hard disk drive as a boot source, and the third entry contains information on the floppy disk drive as a boot source. There is also provided a Boot Source State Index 71, which points to one of the entries in the Boot Source Table 61. The Boot Source Table 61 and the Boot Source State Index 71 are contained in the NVRAM 41 (see Fig. 2) so as to be unaffected by initialization operations. The entries of the Boot Source Table need not occupy contiguous addresses in memory.

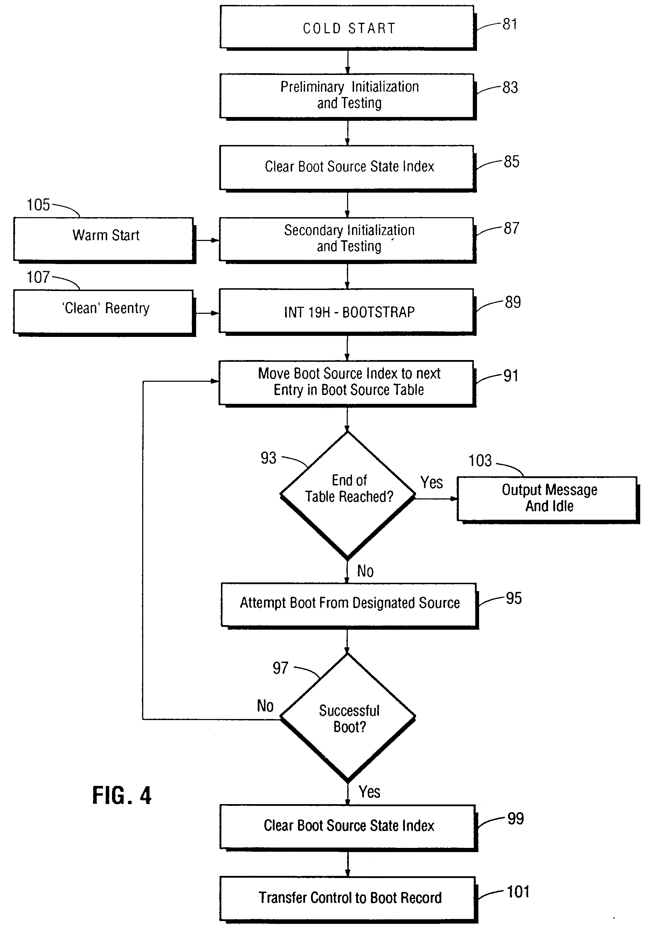

Referring now to Fig. 4, the method of operation will be described. In the flow chart, the following graphical conventions are observed: a rectangle is used to illustrate a process or function and a diamond is used to illustrate a decision. These conventions are well understood by programmers skilled in the art and the flow chart is sufficient to enable a programmer skilled in the art to write code in any suitable computer programming language, such as assembly language, PASCAL or C for a computer such as the IBM Personal System /2 (PS/2) family of computers which supports these languages. (Personal System /2 and IBM are trademarks of International Business Machines Corporation.)

When the computer user turns on the power switch 29 (see Fig. 1), a cold start occurs, step 81 of Fig. 4. This causes an electrical signal to flow over a hard wired path to the CPU 31 (see Fig. 2), wherein leftover data is cleared from the CPU's internal memory registers. In addition, the signal resets the CPU's program counter to a predetermined address (typically this address is F000). The address is the location in ROM where the BIOS program is stored.

The BIOS program typically provides three functions, namely system start-up, hardware interrupt handling and service handling. The hardware interrupt handling and service handling functions are used when the computer is booted and running, and will not be discussed herein. However, the system start-up function is used during the booting process. The next few steps 83-87 are concerned with the system start-up function of the BIOS program. The system start-up function has two main subfunctions, namely power-on self-test (POST) and initialization.

The POST subfunction causes the CPU to check itself. In addition, the CPU sends signals over the local bus 33 to check its operation. The CPU also checks the system clock. Various subsystems are checked. For example, the display 17 has a display adapter printed circuit card (or board) located inside of the computer 11 (and typically connected to the I/O bus 51). The display adapter typically has some BIOS code of its own. The BIOS code of the display adapter is then made a part of the system BIOS code. After checking the display adapter, video signals are then sent to the display 17 to provide visual output to the user. In addition, the SIMMs memory 37 is checked, as are the keyboard 19 and the mouse 15. The type of drives available is then determined. The SCSI controller 43 typically contains BIOS code. This BIOS code is recognized and made a part of the system BIOS code (which originally was stored in ROM 39).

The initialization subfunction creates the interrupt vectors and sets up the computer's subsystems. For example, a subsystem may need to have its registers set and parameters loaded. The parameters are identified by reading the NVRAM 41. The subsystems can also be identified by electronically interrogating the subsystems over the local bus 33 or the I/O bus 51 and then checking for a response.

The initialization and POST subfunctions have been divided into a preliminary initialization and testing step 83 (see Fig. 4) and a secondary initialization and testing step 87. Typically, tile preliminary initialization and testing step 85 initializes and tests those subsystems, registers, states, etc. that are unaffected by the booting of an operating system. The secondary initialization and testing step 87 initializes and tests those subsystems, registers, states, etc. that are affected by the booting of (or attempted booting of) an operating system. For example, when attempting to boot an operating system, low memory locations in the SIMMs are altered, as are various subsystem hardware states (registers, program counter, etc.). Also, interrupt vectors have been intercepted. The secondary initialization and testing step 87 reinitializes those altered items. The secondary initialization and testing step 87 also provides an entry point in the method for a warm start, step 105, wherein the contents of the Boot Source State Index 71 are maintained in a reboot attempt. A warm start, step 105, will be discussed in more detail hereinafter. The amount and type of initialization and testing that is distributed between the preliminary and secondary steps will vary from computer system to computer system.

Before the step of secondary initialization and test (step 87) occurs, the Boot Source State Index 71 is cleared, step 85. Step 85 resets the Boot Source State Index 71 to the top 63 (see Fig. 3) of the Boot Source Table 61.

In step 89, an interrupt is provided to initiate a bootstrap procedure. For INTEL CPU architectures, this interrupt is typically INT 19H, which specifies the retrieval of an address from vector location 19H. The bootstrap call in step 89 thus invokes the steps 91-103, which load an operating system from the boot source that is specified by the Boot Source State Index 71.

In step 91, the Boot Source State Index 71 is moved to the next entry in the Boot Source Table 61. Thus, after a cold start (step 81), the Boot Source State Index 71 is moved from the top 63 to the first entry 65 in the Boot Source Table 61 (see Fig. 3). In step 93, the method determines if the end 69 of the Boot Source Table 61 has been reached. If the result of step 93 is NO, then the method proceeds to step 95. In step 95, the method attempts to boot from the boot source designated by the Boot Source State Index 71 (which after a cold start is the first entry 65 of the Boot Source Table). Suppose, for example, that this boot source is the hard disk drive 25. In step 95, the CPU searches the hard disk for the files that make up the first two system files of the operating system. On IBM computers utilizing a disk operating system from Microsoft (MSDOS), these two system files are IBMBIO.COM and IBMDOS.COM. If these files are found on the hard disk, then an operating system boot record is copied from the first sector of the hard disk into the SIMMs 37. The boot record is 512 bytes and is used to begin the loading of the first two system files. The boot record is loaded into the SIMMs 37 at the address 7C00.

After step 95, the method determines if the initial boot was successful, step 97. This is done, for example, by determining if a boot record has been loaded into the SIMMs 37 at the specified address. If the result of step 97 is YES, the initial boot was successful, then the method proceeds to step 99. In step 99, the Boot Source State Index 71 is cleared, wherein the Boot Source State Index 71 is reset to the top 63 of the Boot Source Table 61. Clearing the Boot Source State Index ensures that the order of boot sources in the Boot Source Table will be honored on the next warm start or clean reentry (both of which will be described in more detail hereinafter). After step 99, the method transfers control to the boot record, step 101. This is accomplished by jumping to address 7C00. The boot record then proceeds to load the remainder of the operating system into the SIMMs 37 in accordance with conventional practices.

If the boot from the boot source is unsuccessful, then a NO result is produced by step 97. The method then returns to step 91, wherein the Boot Source State Index 71 is moved to the next entry in the Boot Source Table 61. In step 93, the method determines if the end 69 of the Boot Source Table has been reached. If the result of step 93 is NO, then the method attempts to boot from the next designated source (for example, the second entry 67 in the Boot Source Table of Fig. 3), step 95, and the method repeats steps 95 et seq.

A boot source may be designed to continue attempting a boot, even if unsuccessful. Such a "one-way" boot source, once entered, never returns control to the CPU or the BIOS boot program. For example, if the network server 55 is a boot source, then the network adapter 53 is designed to continually retry. Once control of the boot process is passed from the CPU 31 to the network adapter 53, the network adapter does not return control to the CPU. Thus, the CPU does not know how to determine if the boot was successful in step 97.

To avoid the possibility of an unsuccessful boot attempt off of a one-way boot source from preventing further boot attempts off of alternative boot sources, a warm start is provided, step 105. In a warm start, the computer is rebooted off of an alternative boot source.

When a boot attempt off of a one-way boot source is unsuccessful, an indication is provided in the form of an error message (produced by the subsystem (for example, the network adapter 53) seeking to access the boot source), or more simply, in the form of an inoperative computer. When the user is provided with such an indication of an unsuccessful boot attempt, the user can initiate a warm start by pressing a predetermined key sequence (such as Ctrl-Alt-Del) on the keyboard or by providing some other user input, step 85. After initiating a warm start, the method then proceeds to step 87 to begin the secondary initialization and testing. By entering the method after step 85, the contents of the Boot Source State Index 71 are maintained (because the Boot Source State Index is not cleared). In step 87, the subsystems that were affected by the unsuccessful boot attempt are reinitialized and tested. Thus, any registers that were altered or interrupts that were interrupted by step 95 are reinitialized. In step 89, the bootstrap procedure is again invoked by providing the interrupt INT 19H. In step 91, the Boot Source State Index 71 is moved to the next entry in the Boot Source Table 61. In step 93, an attempted boot is made from the newly designated boot source. Thus, the user is able to "ratchet" past any one-way boot sources that are encountered in the Boot Source Table 61. Such ratcheting is accomplished by utilizing warm starts, step 105.

If the user wishes to begin at the beginning of the Boot Source Table, then the user can clear the Boot Source State Index by powering the computer off, and then powering the computer back on to provide a cold start, step 81.

In addition to a warm start, a user can also reboot the computer using a "clean" reentry, step 107. The clean reentry saves any time needed to reinitialize the computer. The user invokes a clean reentry by pressing a predetermined key sequence, or providing some other user input. The clean reentry is used when there is no need to reinitialize the system. Thus, when the boot source subsystem (for example the floppy disk drive 27) has caused the computer system environment to be preserved, then the clean reentry can be utilized.

After all of the boot sources provided in the Boot Source Table 61 have been unsuccessfully attempted in booting, then the Boot Source State Index 71 points to the end 69 of the Boot Source Table 61. This produces a YES result from step 93, wherein the method proceeds to step 103. In step 103, an output message is produced on the display screen. Such a message typically would prompt the user to insert boot media. For example, a user could insert a floppy disk into the floppy disk drive. Because all of the boot sources have been attempted unsuccessfully, the computer also idles in step 103, waiting for the user to take some action.

After a boot record has been successfully loaded (a YES result from step 97), the Boot Source State Index 71 is cleared, step 99, as previously described. If the boot record is from a subsystem or adapter (such as the network adapter 53), then various methods can be used to accomplish the clearing of the Boot Source State Index 71. For those subsystems that are designed for this apparatus, the clearing of the Boot Source State Index can occur through a BIOS call. For subsystems which return to the main bootstrap procedure of Fig. 4, the Boot Source State Index clear can be completed by step 99. For other subsystems, the Boot Source State Index clear can be included in run time codes such as a boot record stub, the actual boot record, a device driver, an AUTOEXEC.BAT file or some other start-up sequence code.

There has been described a method for booting an operating system into memory of a computer, said computer having subsystems which comprise said memory, a central processing unit, and non-volatile memory, comprising the steps of: a) providing a list of plural boot sources in said non-volatile memory, said list comprising a one-way boot source, said one-way boot source failing to return control to said central processing unit if a boot from said one-way boot source is unsuccessful, said list also comprising a two-way boot source, said two-way boot source returning control to said central processing unit if a hoot from said two-way boot source is unsuccessful; b) clearing a boot source indicator located in said non-volatile memory; c) initializing and testing said subsystems; d) changing said boot source indicator to indicate a next boot source; e) attempting to boot said computer from said next boot source; f) if said attempt to boot from said boot source was unsuccessful, then reinitializing and testing said subsystems while maintaining said boot source indicator to indicate said next boot source and repeating said steps d) and e).

## Claims

1. A method for booting an operating system into memory of a computer, said computer comprising subsystems, comprising the steps of:
a) initializing and testing said subsystems;
b) setting a boot source indicator to a first boot source;
c) attempting to boot said computer from said first boot source;
c) reinitializing and testing said subsystems while maintaining said boot source indicator on said first boot source;
e) setting said boot source indicator to a second boot source; and
f) attempting to boot said computer from said second boot source.

2. A method as claimed in claim 1 wherein said first boot source is a one-way boot source, wherein said step of attempting to boot said computer from
said first boot source further comprises the steps of:
a) passing control of said booting method to a subsystem accessing said first boot source;
b) failing to successfully boot from said first boot source; and
c) maintaining control of said booting method at said subsystem accessing said first boot source.

3. A method as claimed in claim 1 or claim 2 further comprising the step of, after said step of attempting to boot said computer from said boot source occurs and before said step of reinitializing and testing said subsystems while maintaining said boot source indicator on said first boot source occurs, receiving a user input for initiating said step of reinitializing and testing said subsystems while maintaining said boot source indicator on said first boot source.

4. A method as claimed in any preceding claim wherein said step of initializing and testing said subsystems further comprises the steps of:
a) conducting a preliminary initializing and testing of said subsystems;
b) clearing said boot source indicator; and
c) conducting a secondary initializing and testing of said subsystems.

5. A method as claimed in claim 4, wherein said step of reinitializing and testing said subsystems while maintaining said boot source indicator on said first boot source further comprises repeating said step of conducting a secondary initializing and testing of said subsystems.

6. A method as claimed in any preceding claim further comprising the step of, after said step of attempting to boot said computer from said first boot source occurs, determining if said attempted hoot from said first boot source was successful.

7. An apparatus for booting an operating system into memory of a computer, said computer comprising subsystems, comprising:
a) means for initializing and testing said subsystems;
b) means for setting a boot source indicator to a first boot source;
c) means for attempting to boot said computer from said first boot source;
d) means for reinitializing and testing said subsystems while maintaining said boot source indicator on said first boot source;
e) means for setting said boot source indicator to a second boot source; and
f) means for attempting to boot said computer from said second boot source.

8. Apparatus as claimed in claim 7 wherein said first boot source is a one-way boot source, wherein said means for attempting to boot said computer from said first boot source further comprises:
a) means for passing control of said booting method to a subsystem accessing said first boot source;
b) means for maintaining control of said booting method at said subsystem accessing said first boot source if the attempt to boot from said first boot source is unsuccessful.

9. Apparatus as claimed in claim 7 or claim 8, further comprising means for receiving a user input for initiating said means for reinitializing and testing of said subsystems while maintaining said boot source indicator on said first boot source.

10. Apparatus as claimed in any of claims 7 to 9 wherein said means for initializing and testing said subsystems further comprises:
a) means for conducting a preliminary initializing and testing of said subsystems;
b) means for clearing said boot source indicator; and
c) means for conducting a secondary initializing and testing of said subsystems.
